# DEMANDE DE BREVET EUROPEEN

(11) **EP 2 063 241 A1**
(43) Date de publication de la demande: **27.05.2009**
(21) Numéro de dépôt: 08354079.9
(22) Date de dépôt: 28.10.2008
(51) Int. Cl.: G01J 5/20, H01L 35/32

(54) **Détecteur de rayonnement électromagnétique à connexion par nanofil et procédé de réalisation**

(30) Priorité: 12.11.2007 FR 0707917
(71) Demandeur: Commissariat à l'Energie Atomique, 75015 Paris (FR)
(72) Inventeur: Ouvrier-Buffet, Jean-Louis, 74320 Sevrier (FR); Gruss, Jean-Antoine, 38170 Seyssinet-Pariset (FR)
(74) Mandataire: Jouvray, Marie-Andrée

(57) **Abrégé**

Le détecteur de rayonnement électromagnétique comporte au moins une membrane d'absorption (1) du rayonnement transformant l'énergie absorbée en chaleur, transmise à au moins un thermomètre (6) résistif, ayant une résistance variant en fonction de la température. Chaque membrane d'absorption (1) est suspendue au-dessus d'un substrat (2) par un nanofil (8), relié à la zone centrale de la membrane (1). Le nanofil (8) comporte une âme (9) électriquement conductrice et une couche extérieure (11) électriquement conductrice, isolées électriquement l'une de l'autre et respectivement connectées à des zones de mesure dudit thermomètre (6). Le nanofil sert donc à la fois de support de la membrane et de connexion électrique entre les zones de mesure et un circuit disposé au niveau du substrat.

## Description

### Domaine technique de l'invention

L'invention concerne un détecteur de rayonnement électromagnétique comportant au moins une membrane d'absorption du rayonnement transformant l'énergie absorbée en chaleur, transmise à au moins un thermomètre résistif, ayant une résistance variant en fonction de la température, la membrane étant suspendue au-dessus d'un substrat par des moyens de support constituant des moyens de connexion électrique, à base de nanofils.

L'invention concerne également un procédé de réalisation d'un tel détecteur de rayonnement électromagnétique.

### État de la technique

Les avancées techniques récentes de la micro et de la nano-électronique du silicium et de la réalisation de couches minces ont donné un nouvel essor à la technologie des détecteurs thermiques de rayonnement infrarouge comportant une membrane absorbante, faisant aussi office de matériau thermomètre ou préférentiellement sur laquelle est disposé un matériau thermomètre, la membrane étant fixée en suspension au-dessus d'un substrat par des moyens de support.

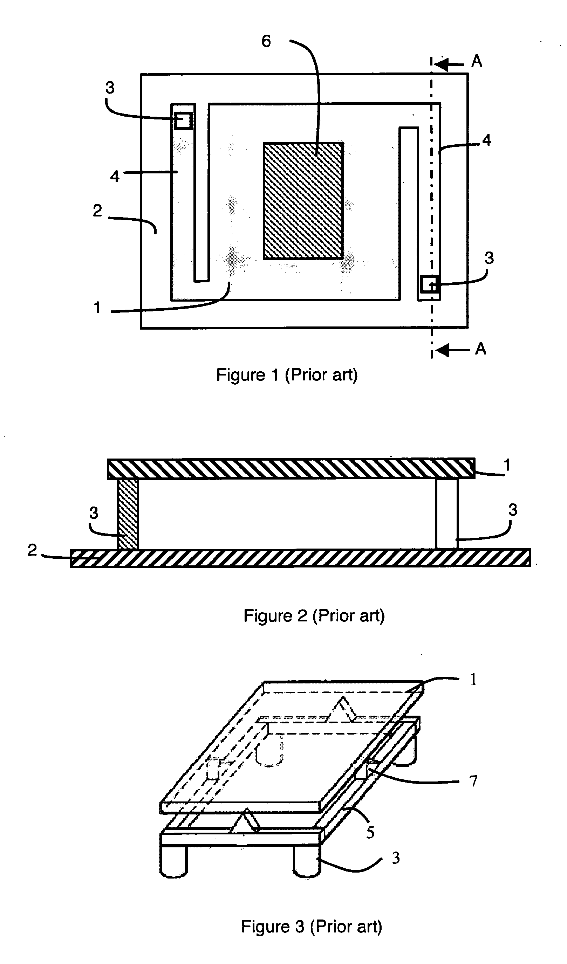

Les figures 1 et 2 illustrent un détecteur de rayonnement électromagnétique comportant une membrane 1, absorbante vis-à-vis du rayonnement électromagnétique incident, et maintenue en suspension sensiblement parallèlement à un substrat 2, par des moyens de support. Ceux-ci comportent deux bras 4 d'isolation thermique, électriquement conducteurs, solidaires de la membrane 1 et disposés sensiblement dans le plan de la membrane 1. Chaque bras 4 est fixé au substrat 2 par l'intermédiaire d'un pilier 3, perpendiculaire au substrat 2 et supportant la membrane ; le pilier 3 doit assurer à la fois la connexion électrique et l'isolation thermique. Sous l'effet du rayonnement, la membrane s'échauffe et transmet sa température à un thermomètre 6 disposé sur la membrane, par exemple un thermistor sous forme d'une couche mince déposée sur la membrane.

Le substrat 2 peut comporter un circuit électronique intégré sur une plaquette de silicium et comprenant, d'une part, les circuits de stimuli et de lecture du thermomètre et, d'autre part, des composants de multiplexage qui permettent de sérialiser les signaux issus de différents thermomètres et de les transmettre vers un nombre réduit de sorties afin d'être exploités par un système d'imagerie usuel. Afin d'améliorer la sensibilité du détecteur thermique, les moyens de support (pilier 3 et bras 4), sont conçus de manière à isoler thermiquement la membrane 1 absorbante du substrat 2, permettant ainsi de limiter les pertes thermiques de la membrane et, par conséquent, de préserver son échauffement.

La connexion électrique entre le thermomètre 6 et les circuits de lecture disposés sur le substrat 2 est généralement assurée par l'intermédiaire des bras 4 et d'une métallisation des piliers 3.

Le document EP 1 653 205 divulgue un détecteur bolométrique à isolation thermique par constriction. Comme précédemment, ce détecteur comporte des piliers 3, destinés à maintenir la partie active suspendue au-dessus du substrat et à assurer la conduction électrique entre le circuit de lecture et la partie active. Pour optimiser l'isolation thermique, les piliers 3 peuvent être prolongés par des micropointes ou, comme sur la figure 3, supporter un cadre intermédiaire 5 muni de micropointes 7 supportant la membrane bolométrique 1. Les micropointes 7 peuvent être constituées par des nanotubes ou des nanofils de carbone.

### Objet de l'invention

L'invention a pour objet un détecteur de rayonnement électromagnétique, notamment de type bolomètre, présentant de bonnes performances et facile à réaliser.

Selon l'invention, ce but est atteint par le fait que les moyens de support comportent pour chaque membrane un nanofil, relié à une zone de ladite membrane, le nanofil ayant une âme électriquement conductrice et une couche extérieure électriquement conductrice, isolées électriquement l'une de l'autre et respectivement connectées à des zones de mesure distinctes du thermomètre correspondant.

L'invention a aussi pour objet un procédé de réalisation d'un détecteur de rayonnement électromagnétique. Ce procédé comporte les étapes successives suivantes :
- création de plots de connexion sur le substrat,
- dépôt d'une goutte de catalyseur sur chaque plot de connexion,
- croissance de l'âme des nanofils,
- formation d'une couche d'isolant électrique sur l'âme de chaque nanofil,
- dépôt d'une résine polymère, dans laquelle sont noyées les âmes des nanofils recouvertes de la couche d'isolant électrique,
- planarisation,
- dégagement des extrémités libres de l'âme des nanofils,
- dépôt et structuration d'une couche électriquement isolante, constituant la membrane électriquement isolante associé à chaque nanofil,
- enlèvement de la résine de polymère,
- formation de la couche extérieure électriquement conductrice de chaque nanofil et du thermomètre.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 illustre une vue de dessus d'un détecteur selon l'art antérieur.
La figure 2 représente, en coupe selon AA, le détecteur de la figure 1.
La figure 3 illustre autre détecteur selon l'art antérieur.
La figure 4 illustre un mode de réalisation d'un détecteur selon l'invention.
La figure 5 illustre une vue de dessus d'un mode de réalisation particulier d'un détecteur selon l'invention.
La figure 6 illustre une vue en coupe selon BB du détecteur de la figure 5.
Les figures 7 à 12 illustrent un procédé de réalisation d'un mode particulier de réalisation d'un détecteur selon l'invention.

### Description de modes de réalisation particuliers

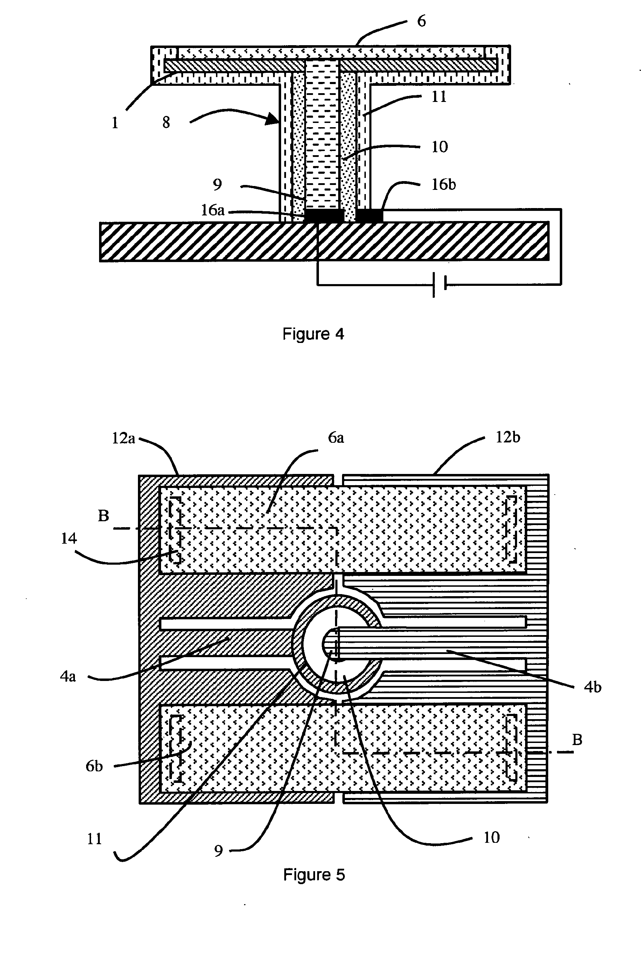

Sur les figures 4, 6 et 12, le détecteur de rayonnement électromagnétique est un bolomètre, qui comporte au moins une membrane d'absorption 1 du rayonnement suspendue au-dessus d'un substrat 2 par un seul nanofil 8, qui assume à la fois l'arrivée et le retour du courant électrique et le support de la membrane d'absorption 1. Un thermomètre 6 est porté par la membrane d'absorption 1 ou intégré dans celle-ci. En chauffant, la membrane d'absorption 1 transmet sa chaleur au thermomètre qui est de type résistif, c'est-à-dire que sa résistance électrique varie de manière connue en fonction de sa chaleur. Le thermomètre 6 peut être constitué par au moins une couche ou un barreau à fort coefficient de température et à faible bruit basse fréquence. Le thermomètre est relié d'une part à l'âme 9 du nanofil et d'autre part à la couche extérieure 11.

Le nanofil 8, de préférence de section circulaire, est relié à une zone, de préférence centrale, de la membrane 1. Il comporte une âme 9, électriquement conductrice, et une couche extérieure 11, également électriquement conductrice, isolées électriquement l'une de l'autre , par un isolant 10. En leurs extrémités, l'âme 9 et la couche extérieure 11 du nanofil sont respectivement connectées à des zones de mesure distinctes du thermomètre 6 et sont respectivement reliées à leur base à des plots de connexion 16a et 16b formée au niveau du substrat. Les plots 16a et 16b sont reliés à des bornes de connexion correspondantes d'une alimentation nécessaire à la mesure de la température.

Dans un le mode de réalisation illustré à la figure 4, le détecteur, en forme de champignon, comporte au moins une membrane 1 d'absorption électriquement isolante supportant un thermomètre 6. La membrane est traversée en son centre par l'âme 9 du nanofil 8. L'âme du nanofil est en contact électrique avec le thermomètre 6. La couche extérieure 11 recouvre le nanofil et une partie de la membrane 1 pour venir en contact avec le thermomètre, de préférence à la périphérie de celui-ci.

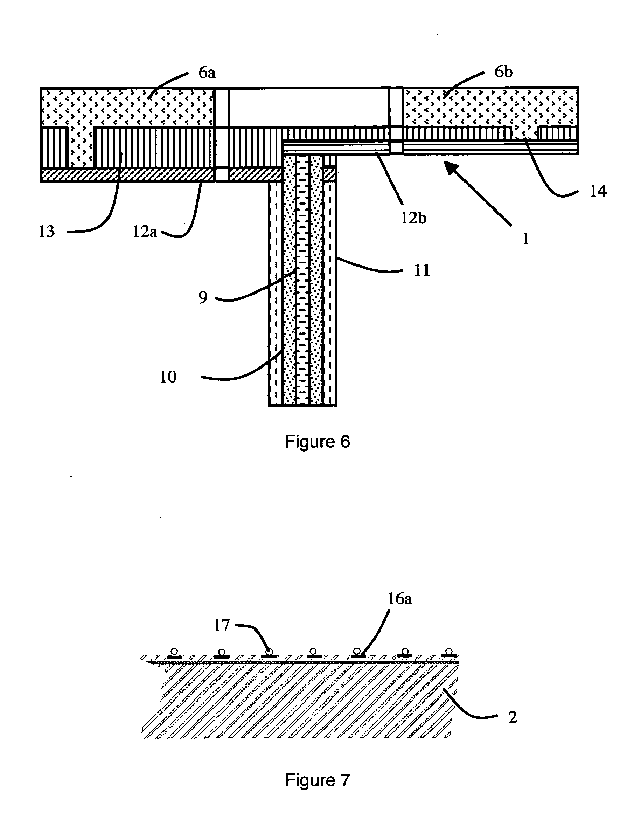

Dans le mode de réalisation préférentiel illustré aux figure 5 et 6, l'âme 9 et la couche extérieure 11 du nanofil 8 sont reliées respectivement à deux parties 12a et 12b électriquement conductrices formant la membrane d'absorption 1. Les deux parties 12a et 12b font à la fois office d'absorbeur du rayonnement électromagnétique et de conducteur d'électricité pour alimenter le thermomètre 6. La partie 12a peut être reliée à l'âme 9 du nanofil par un bras 4a d'isolation thermique, électriquement conducteur, tandis que la partie 12b peut être reliée à la couche extérieure du nanofil par un bras 4b d'isolation thermique, également électriquement conducteur. La partie 12a et le bras 4a associé sont électriquement isolés de l'autre partie 12b et du bras 4b associé par une couche 13 électriquement isolante. La couche 13 électriquement isolante comporte, en regard de chaque partie 12a et 12b, au moins une ouverture 14. Sur les figures 5 et 6, le thermomètre 6 est composé de deux barreaux 6a et 6b disposés sur la couche 13 électriquement isolante. Chaque barreau est en contact électrique avec les deux parties 12a et 12b au niveau des ouvertures 14 formant des zones de mesure. Les barreaux 6a et 6b sont en matériaux à fort coefficient de température et à faible bruit basse fréquence tels que le silicium amorphe et ses alliages, l'oxyde de vanadium, et plus généralement, certains oxydes des métaux de transition.

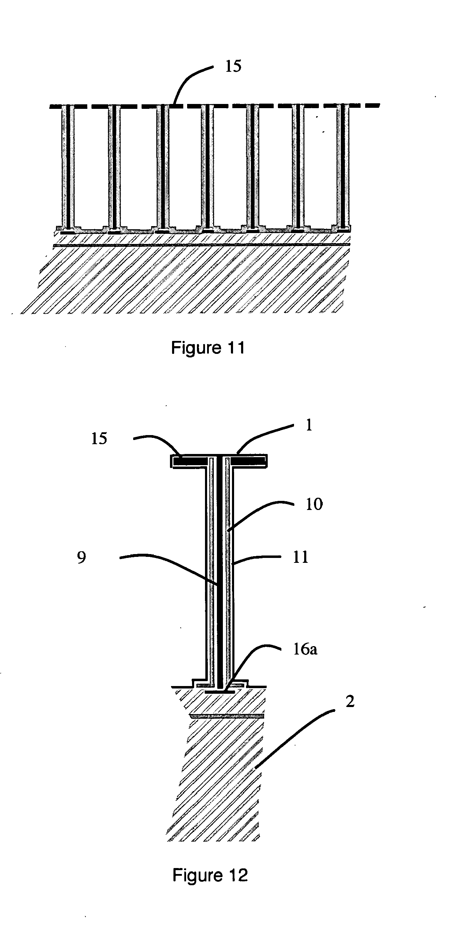

Dans le mode de réalisation particulier illustré à la figure 12, le détecteur, en forme de champignon, comporte au moins une membrane 15 électriquement isolante, traversée en son centre par l'âme 9 du nanofil 8. Une couche électriquement conductrice constitue la couche extérieure 11 du nanofil et entoure la membrane 15 électriquement isolante. Cette couche électriquement conductrice constitue, sur la membrane isolante 15, à la fois la membrane d'absorption 1 et le thermomètre 6. Elle est en contact avec l'âme 9 du nanofil 8 au-dessus de la membrane isolante 15 et connecte à la périphérie du nanofil, le thermomètre à la base du nanofil.

Dans les différents modes de réalisation particuliers décrits ci-dessus, comme dans le mode de réalisation de la figure 12, un seul nanofil 8 constitue à la fois un pilier de support central pour la membrane 1 et la connectique électrique associé. En effet, l'utilisation d'un nanofil constitué par une âme 9 et une couche extérieure 11 coaxiales, électriquement conductrice et isolées l'une de l'autre, permet d'utiliser le nanofil pour connecter un circuit de traitement intégré dans le substrat 2 à deux zones de mesure distinctes du détecteur.

Un procédé de réalisation d'un détecteur comportant plusieurs détecteurs élémentaires, en forme de champignon, selon la figure 12, disposés sous forme de barre ou de matrice, est illustré aux figures 7 à 12.

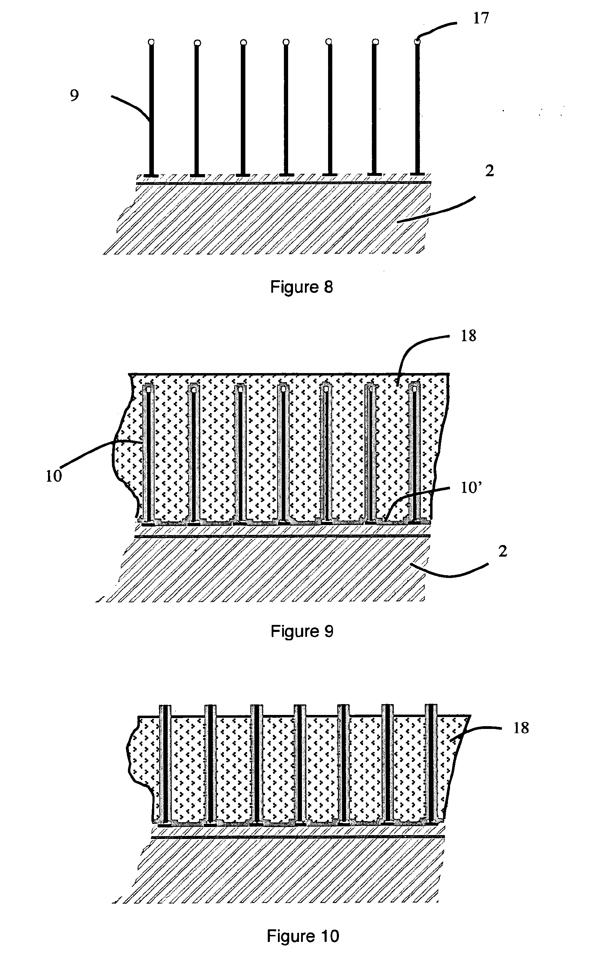

Tout d'abord (figure 7), des plots de connexion 16a sont formées au niveau du substrat 2 (en silicium ou de type SOI), de préférence par dopage localisé, par implantation ou épitaxie. Puis une goutte de catalyseur 17, de préférence en or, est déposée sur chaque plot de connexion 16a. On réalise ensuite (figure 8) une étape de croissance de l'âme 9 d'une pluralité de nanofils 8, de préférence en silicium dopé, par la technique Vapeur-Liquide-Solide (VLS). Une couche électriquement isolante est ensuite formée, de préférence par oxydation ou dépôt d'oxyde de silicium. Elle recouvre l'âme 9 de chaque nanofil, constituant ainsi l'isolant 10 des nanofils et recouvrant 10' le substrat 2 entre deux nanofils adjacents (figure 9). Puis une résine polymère 18 est déposée, noyant les âmes 9 des nanofils 8 recouvertes de la couche d'isolant électrique 10. La résine 18 est par exemple du parylène déposé en phase vapeur ou à la tournette (« spin-coating »). On procède ensuite à une étape de planarisation par polissage mécano-chimique, puis dégagement des extrémités libres (extrémités supérieures), de l'âme 9 des nanofils 8, par attaque chimique ou plasma (figure 10). L'isolant 10 est de préférence conservé à l'extrémité en saillie de l'âme des nanofils. Puis (figure 11), le dépôt et la structuration d'une couche électriquement isolante permet de constituer une membrane électriquement isolante 15 au dessus de chaque nanofil. La résine de polymère 18 est ensuite enlevée, puis la couche extérieure 11 électriquement conductrice et le thermomètre sont formés.

Selon une variante de réalisation (figure 12), après enlèvement de la résine polymère 18, les nanofils sont métallisés par dépôt d'une couche électriquement conductrice, par exemple par CVD ou PCVD. Cette couche électriquement conductrice est de préférence métallique. Elle forme à la fois la membrane résistive (thermomètre) et absorbante 1 au-dessus de chaque membrane 15. Si l'absorption n'est pas suffisante, on peut envisager d'ajouter une couche supplémentaire à fort coefficient d'absorption sur la couche électriquement conductrice. La couche extérieure 11 de chaque nanofil sert de connectique électrique de retour entre le coeur du nanofil et le substrat. Cette même couche connecte en série, au niveau du substrat à la base des nanofils, les couches extérieures 11 des nanofils adjacents.

Selon une autre variante, pour obtenir le détecteur illustré à la figure 4, après enlèvement de la résine polymère 18, la couche extérieure 11 est formée par dépôt PCVD. Elle recouvre chaque nanofil et une partie de la membrane 1 associée. Le thermomètre est alors formé sur la membrane 1 dans un emplacement laissé libre après gravure. Le thermomètre peut aussi d'abord être formé sur la membrane 1, puis la couche extérieure 11 déposée pour recouvrir les nanofils et une partie de la membrane 1 pour venir en contact avec le thermomètre.

Chaque nanofil 8 a, par exemple, une longueur de 2,5 microns. Son âme 9 est réalisée en matériau conducteur, de préférence en semi-conducteur fortement dopé ou en métal, de 15nm de diamètre. La couche d'isolation électrique 10, de préférence en Si02 a, par exemple, une épaisseur de 2nm. La couche extérieure 11 de chaque nanofil est en matériau conducteur, de préférence en semi-conducteur fortement dopé ou en métal, de 3nm d'épaisseur. En supposant que la résistance thermique du nanofil 8 est équivalente à celle d'un nanofil massif de même diamètre, et que la loi de Fourier qui suppose un comportement diffusif des phonons reste applicable, un tel nanofil 8, de 25nm de diamètre a une conductivité thermique k de l'ordre de 9,5W/m.K, soit une résistance thermique Rth = L/kS.

L étant la longueur du nanofil et S la section de passage du flux de chaleur dans le nanofil, d'environ 540MK/W. Cette résistance thermique est très supérieure à celle obtenue avec les bras de suspension 4 selon l'art antérieur, qui est globalement de l'ordre de 50 à 100 MK/W.

Dans le cas où l'âme 9 et la couche extérieure 11 sont réalisées en semi-conducteur fortement dopé, le semi-conducteur peut être choisi parmi Si, Ge, GaAs, InP, GaN.

En pratique, cette résistance thermique peut être plus importante. En effet, la couche d'isolant électrique 10, qui intervient pour environ 20% de la section de passage du flux thermique, a une conductivité thermique plus faible, de l'ordre de 1 W/m.K que la conductivité thermique retenue ci-dessus. Par ailleurs, la configuration annulaire apporte un effet supplémentaire de diffusion de phonons aux interfaces. De plus, l'âme 9 en silicium dopé peut être réalisée par un empilement axial d'hétéro-jonctions dont la conductivité thermique est réduite d'un facteur 2 à 3. Ce type de nanofil à hétéro-jonction est, par exemple,décrit dans le brevet US6996147. L'augmentation de la longueur du nanofil apporterait une augmentation proportionnelle de la résistance thermique, mais au prix d'un désaccord de la cavité. Par exemple, pour un nanofil de 10 microns de long, la résistance thermique serait multipliée par 4 et atteindrait 2140MK/W.

Le faible diamètre des nanofils, couplé à un élancement élevé rendu possible par le positionnement du nanofil sous la membrane correspondante permet d'assurer une isolation thermique excellente, bien meilleure que les dispositifs connus. Cependant pour des raisons de rigidité ou d'amélioration du recouvrement des parois verticales lors de l'élaboration, il peut être envisagé de réaliser les couches (en particulier la couche isolante par ailleurs faiblement conductrice thermiquement) d'épaisseur importante. Le diamètre total du nanofil peut alors atteindre 250nm. De préférence, le diamètre total d'un nanofil est inférieur à 250nm.

Un détecteur comporte de préférence, plusieurs membranes 1 réalisant des pixels de mesure disposés plus classiquement sous forme de matrice. Les membranes 1 sont alors reliées par l'âme 9 des nanofils à un plot de connexion commun disposé au niveau du substrat. Le plot commun est relié à une borne de l'alimentation. D'autre part, par les couches extérieures 11 des nanofils sont connectées individuellement au plot de connexion 16b correspondant relié à une autre borne d'alimentation.

Suivant la longueur d'onde du rayonnement considéré, le détecteur peut travailler aussi bien dans l'infrarouge proche (longueurs d'onde de 0,7 à 5 microns) ou moyen (de 5 à 30 microns), dans le visible (longueurs d'onde comprises entre 400 et 700 nm), que dans l'ultraviolet et en dessous (longueurs d'onde comprises entre 10 et 400 nm).

Afin d'améliorer l'isolation thermique de la membrane, l'ensemble du détecteur peut être placé sous vide ou sous gaz à très faible pression, derrière une fenêtre transparente au rayonnement considéré.

Le détecteur peut également comporter des moyens de refroidissement afin de diminuer le bruit thermique. Le substrat peut aussi être maintenu à une température déterminée par des éléments à effets Peltier afin d'augmenter la précision et la reproductibilité du détecteur.

L'utilisation d'un nanofil coaxial en tant qu'élément de connectique unique pour chaque membrane présente de nombreux avantages par rapport à une configuration à au moins deux bras d'isolation et à piliers de support.

L'avantage majeur résulte de la forte intégration provenant de la taille extrêmement réduite de l'unique support de la membrane absorbante. La nature coaxiale du nanofil servant de support à la membrane permet l'utilisation d'un seul nanofil par membrane. Le détecteur décrit ci-dessus a, en conséquence, une bonne isolation thermique du thermomètre, un bon facteur de remplissage du point élémentaire et une capacité à réaliser des détecteurs élémentaires à un pas très petit (jusqu'à la moitié de la longueur d'onde du rayonnement à mesure) car la taille de l'unique nanofil supportant chaque membrane est cohérente avec la taille de la membrane.

## Revendications

1. Détecteur de rayonnement électromagnétique comportant au moins une membrane d'absorption (1) du rayonnement transformant l'énergie absorbée en chaleur, transmise à au moins un thermomètre (6) résistif, ayant une résistance variant en fonction de la température, la membrane (1) étant suspendue au-dessus d'un substrat (2) par des moyens de support constituant des moyens de connexion électrique (7), à base de nanofils (8), détecteur **caractérisé en ce que** les moyens de support comportent pour chaque membrane un nanofil, relié à une zone de ladite membrane (1), le nanofil (8) ayant une âme (9) électriquement conductrice et une couche extérieure (11) électriquement conductrice, isolées électriquement l'une de l'autre et respectivement connectées à des zones de mesure distinctes du thermomètre correspondant (6).

2. Détecteur selon la revendication 1, **caractérisé en ce que** l'âme (9) et la couche extérieure (11) du nanofil, sont reliées respectivement à deux parties (12a,12b) électriquement conductrices, formant la membrane (1), une des parties (12a) étant électriquement isolée de l'autre partie (12b) par une couche électriquement isolante (13), la couche électriquement isolante (13) comportant, en regard de chaque partie (12a,12b), au moins une ouverture (14), le thermomètre (6, 9) étant disposé sur la couche électriquement isolante (13) et en contact électrique avec les deux parties (12a,12b) au niveau desdites ouvertures (14) formant des zones de mesure.

3. Détecteur selon la revendication 2, **caractérisé en ce que** l'âme et la couche extérieure sont respectivement reliées à la partie conductrice par des bras (4a,4b) d'isolation thermique électriquement conducteurs, lesdits bras étant réalisés dans le même matériau que lesdites parties.

4. Détecteur selon l'une des revendication 1 à 3, **caractérisé en ce que** le thermomètre est constitué de deux barreaux (6a,6b) connecté aux zones de mesure.

5. Détecteur selon la revendication 1, **caractérisé en ce qu'**il comporte au moins une membrane (15) électriquement isolante, traversée en son centre par l'âme (9) du nanofil, une couche électriquement conductrice constituant la couche extérieure (11) du nanofil et entourant la membrane (15) électriquement isolante, pour former, au-dessus de la membrane électriquement isolante la membrane d'absorption (1) et le thermomètre (6), en contact avec l'âme (9) du nanofil au-dessus de la membrane (15) électriquement isolante.

6. Détecteur selon la revendication 1, **caractérisé en ce que** la membrane d'absorption (1) est électriquement isolante et supporte le thermomètre (6), ladite membrane (1) étant traversée en son centre par l'âme (9) du nanofil qui est en contact électrique avec le thermomètre (6), une couche électriquement conductrice constitue la couche extérieure (11) du nanofil et recouvrant une partie de la membrane (1) pour venir en contact avec le thermomètre à la périphérie de celui-ci.

7. Détecteur selon l'une quelconque des revendications 1 à 6, **caractérisé en ce que** l'âme (9) et la couche extérieure (11) sont en métal ou en semi-conducteur fortement dopé choisi parmi Si, Ge, GaAs, InP, GaN.

8. Détecteur selon l'une quelconque des revendications 1 à 7, **caractérisé en ce que** le nanofil a un diamètre total inférieur à 250nm.

9. Détecteur selon l'une quelconque des revendications 1 à 8 **caractérisé en ce qu'**une pluralité de membranes d'absorption (1) sont disposées sous forme de matrice et reliées par l'âme (9) des nanofils (8) à des plots de connexion (16a,16b) électrique au niveau du substrat, les couches extérieures (11) des nanofils, étant connectés au niveau du substrat.

10. Procédé de réalisation d'un détecteur, selon l'une des revendications 5 à 9, **caractérisé en ce qu'**il comporte les étapes successives suivantes :
- création de plots de connexion (16a) au niveau du substrat (2),
- dépôt d'une goutte de catalyseur (17) sur chaque plot de connexion (16a),
- croissance de l'âme (9) des nanofils,
- formation d'une couche d'isolant électrique (10) sur l'âme (9) de chaque nanofil,
- dépôt d'une résine polymère (18), dans laquelle sont noyées les âmes (9) des nanofils recouvertes de la couche (10) d'isolant électrique,
- planarisation,
- dégagement des extrémités libres de l'âme des nanofils,
- dépôt et structuration d'une couche électriquement isolante, constituant la membrane électriquement isolante (1,15) associé à chaque nanofil (8),
- enlèvement de la résine de polymère (19),
- formation de la couche extérieure (11) électriquement conductrice de chaque nanofil et du thermomètre.

11. Procédé selon la revendication 10, **caractérisé en ce que** le thermomètre (6) est formé sur la membrane (1) avant le dépôt de la couche extérieure (11).

12. Procédé selon la revendication 10, **caractérisé en ce que** la couche extérieure (11) est formée par un dépôt recouvrant chaque nanofil et une partie de la membrane (1) associée, le thermomètre étant formé dans un emplacement après gravure de ladite couche.

13. Procédé selon la revendication 10, **caractérisé en ce que** la couche extérieure (11) et le thermomètre sont formés par le dépôt d'une même couche.

14. Procédé selon l'une des revendications 10 à 14, **caractérisé en ce que** la formation de la couche d'isolant électrique (10) sur l'âme (9) des nanofils (8) est réalisée par oxydation ou dépôt d'oxyde de silicium.
